# EUROPEAN PATENT SPECIFICATION

(11) **EP 2 236 203 B1**
(45) Date of publication and mention of the grant of the patent: **19.04.2017**
(21) Application number: 10250426.3
(22) Date of filing: 09.03.2010
(51) Int. Cl.: B01J 13/02

(54) **Membrane vesicle fission system**
Membranvesikelspaltungssystem
Système de fission de vésicules de membranes

(30) Priority: 31.03.2009 JP 2009087377
(43) Date of publication of application: 06.10.2010
(73) Proprietor: NTT DOCOMO, INC., Chiyoda-ku Tokyo 100-6150 (JP); National University corporation Nara Institute of Science and Technology, Ikoma-shi Nara 630-0192 (JP)
(72) Inventor: Moritani, Yuki, Tokyo 100-6150 (JP); Hiyama, Satoshi, Tokyo 100-6150 (JP); Kikuchi, Junichi, Ikoma-shi, Nara 630-0192 (JP); Kazuma, Yasuhara, Ikoma-shi, Nara 630-0192 (JP)
(74) Representative: Maury, Richard Philip

(56) References cited:
- EP-A1- 1 850 513
- YASUYUKI INAOKA ET AL: "Vesicle Fission of Giant Unilamellar Vesicles of Liquid-Ordered-Phase Membranes Induced by Amphiphiles with a Single Long Hydrocarbon Chain", LANGMUIR, vol. 23, no. 2, 1 January 2007 (2007-01-01), pages 720-728, XP55011333, ISSN: 0743-7463, DOI: 10.1021/la062078k
- TANAKA T ET AL: "Shape Changes and Vesicle Fission of Giant Unilamellar Vesicles of Liquid-Ordered Phase Membrane Induced by Lysophosphatidylcholine", LANGMUIR: THE ACS JOURNAL OF SURFACES AND COLLOIDS, AMERICAN CHEMICAL SOCIETY, WASHINGTON, DC, USA, vol. 20, 1 January 2004 (2004-01-01), pages 9526-9534, XP002443914, ISSN: 0743-7463, DOI: 10.1021/LA049481G
- Y. MORITANI ET AL: "Molecular Communication among Nanomachines Using Vesicles", NSTI-NANOTECH 2006, 1 January 2006 (2006-01-01), pages 705-708, XP55011339, ISBN: 978-0-97-679857-6
- TAMBA Y ET AL: "Single Giant Vesicle Method Reveals Effect of Antimicrobial Peptide Magainin 2 on Membrane Permeability", BIOCHEMISTRY, AMERICAN CHEMICAL SOCIETY, US, vol. 44, 1 January 2005 (2005-01-01), pages 15823-15833, XP002443913, ISSN: 0006-2960, DOI: 10.1021/BI051684W
- ZHONGHUA WANG: "Budding and Fission of Cationic Binary Lipid Vesicles Induced by the Incorporation of Pyranine", CHEMISTRY LETTERS, CHEMICAL SOCIETY OF JAPAN, JP , vol. 39, no. 1 1 January 2010 (2010-01-01), pages 54-55, XP008145003, ISSN: 0366-7022, DOI: 10.1246/CL.2010.54 Retrieved from the Internet: URL:www.jstage.jst.go.jp/article/cl/39/1/3 9_54/_article [retrieved on 2009-12-12]

## Description

### BACKGROUND OF THE INVENTION

### 1. Field of the Invention

The present invention relates to membrane vesicle fission systems, molecular communication systems, membrane vesicle fission methods and molecular communication methods.

### 2. Description of the Related Art

A molecular communication system is known, the molecular communication system having a molecular transmitter which releases a molecular capsule in which an information molecule is included and a molecular receiver which receives the information molecule included in the molecular capsule released from the molecular transmitter (see Patent Document 1).

Additionally, Patent Document 2 and Non-patent Document 1 disclose a method of using, as the molecular transmitter, a liposome, which is formed from a phospholipid such as phosphatidylcholine and fissioning a liposome to release the information molecule from the molecular transmitter.

Moreover, Non-Patent Document 2 discloses applying a surfactant having a single long hydrocarbon chain group such that the surfactant concentration becomes no less than a threshold and no more than a critical micelle concentration (CMC) to fission a giant unilamellar vesicle (GUV) having a lipid bi-layer membrane in a liquid-ordered phase. Here, lysophosphatidylcholine (lyso-PC), lysophosphatidic acid (lyso-PA), sodium dodecyl sulfate (SDS), and octylglucoside are used as a surfactant having the single long hydrocarbon chain group.

However, there is a problem that, due to restrictions on the concentration of the surfactant having the single long hydrocarbon chain group and on the lipid bi-layer membrane constituting the GUV, the GUV cannot be fissioned in a general-purpose condition.
Patent Document 1: JP2008-68347A
Patent Document 2: JP2007-296609A
Non-patent Document 1: Y. Moritani, et al, "Molecular Communication among Nanomachines Using Vesicles", Proceedings on NSTI Nanotechnology Conference and Trade Show 2006, vol. 2, pp. 705-708, May 2006.
Non-patent Document 2: Y. Inaoka, et al, "Vesicle Fission of Giant Unilamellar Vesicles of Liquid-Ordered-Phase Membranes Induced by Amphiphiles with a Single Long Hydrocarbon Chain," Langmuir, vol.23, pp.720-728, 2007.

In view of the problems of the conventional art as described above, one object of the present invention is to provide a membrane vesicle fission system and a membrane vesicle fission method that make it possible to fission a membrane vesicle in a general-purpose condition. Moreover, another object of the present invention is to provide a molecular communication system using the membrane vesicle fission system and a molecular communication method using the membrane vesicle fission method.

### SUMMARY OF THE INVENTION

In order to solve the problems as described above, in the present invention, a membrane vesicle fission method is provided, the method including the step of applying, to a membrane vesicle having a lipid bi-layer membrane including a cationic lipid, an anionic material having a hydrophobic group.

According to the present invention, a membrane vesicle fission system and a membrane vesicle fission method may be provided that make it possible to fission a membrane vesicle in a general-purpose condition. Moreover, according to the present invention, a molecular communication system having the membrane vesicle fission system and a molecular communication method having the membrane vesicle fission method may be provided.

### BRIEF DESCRIPTION OF THE DRAWINGS

FIG. 1 is a conceptual diagram illustrating one example of a membrane vesicle fission system according to the present invention;
FIG. 2 is a diagram illustrating a lipid bi-layer membrane in the membrane vesicle in FIG. 1;
FIG. 3 is a diagram illustrating a process in which the membrane vesicle in FIG. 1 fissions;
FIG. 4 is a diagram illustrating a variation of the membrane vesicle in FIG. 1;
FIG. 5 is a conceptual diagram illustrating one example of a molecular communication system according to the present invention;
FIG. 6 is a diagram illustrating a process in which a membrane vesicle in FIG. 5 fissions; and
FIGS. 7A, 7B, 7C, and 7D are optical microscope photographs illustrating a membrane vesicle after having added a pyranine aqueous solution according to an example of the present invention.

### DETAILED DESCRIPTION OF PREFERRED EMBODIMENTS

Next, embodiments of the present invention are described in conjunction with the drawings.

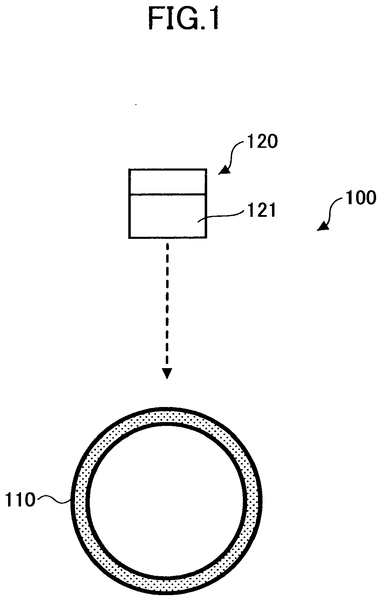

An example of a membrane vesicle fission system according to the present invention is illustrated in FIG. 1. The membrane vesicle fission system 100 has a membrane vesicle 110; and an aqueous solution-applying apparatus 120 which applies, to the membrane vesicle 110, an aqueous solution 121 of an anionic material having a hydrophobic group.

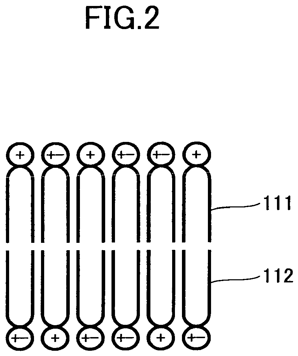

As illustrated in FIG. 2, the membrane vesicle 110, which has a lipid bi-layer membrane having therein a cationic lipid 111 and an amphoteric phospholipid 112 coexisting, exists in water. The cationic lipid 111 and the amphoteric phospholipid 112 exist in a state such that hydrophobic groups are autonomously aligned via hydrophobic interaction and an ionic group is exposed on a surface (see FIG. 2). The membrane vesicle 110 may be formed by agitating the cationic lipid 111 and the amphoteric phospholipid 112, or by having the cationic lipid 111 and the amphoteric phospholipid 112 undergo ultrasonic dispersion. Moreover, the membrane vesicle 110 may be formed by placing, into a glass tube, an organic solvent such as chloroform or methanol in which the cationic lipid 111 and the amphoteric phospholipid 112 are dissolved, and then adding water to a lipid film obtained by volatilizing the organic solvent to swell the lipid film.

The cationic lipid 111 may include a lipid having two long hydrocarbon chain groups, a quaternary ammonium salt type or pyridinium salt type cation group, etc., and two or more kinds thereof may be used in combination, but is not particularly limited thereto. Among the above, as stabilization of a form of aggregation by a hydrogen bonding effect between lipids is important in a formation of the lipid bi-layer membrane, the cationic lipid 111 is preferably N⁺C₃U2C₁₆, which is expressed in the following chemical formula:

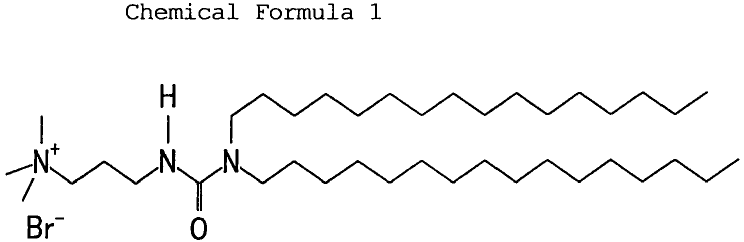

The content of the cationic lipid 111 in the lipid bi-layer membrane is normally 5-95 mol% and preferably in the order of 50 mol%. When the content becomes less than 5 mol%, a domain formation necessary to fission the membrane vesicle 110 may become insufficient, while the membrane vesicle 110 does not fission effectively when the content exceeds 95 mol%.

The amphoteric phospholipid 112 may include phosphatidylcholine, sphingomyelin, etc., and two or more kinds thereof may be used in combination, but is not particularly limited thereto. Among the above, as it is important that it is easy for a phase separation from the cationic lipid to occur in order to induce a fission of the membrane vesicle 110, The amphoteric phospholipid 112 is preferably DMPC (Dimyristoylphosphatidylcholine), which is expressed in the following chemical formula:

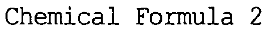

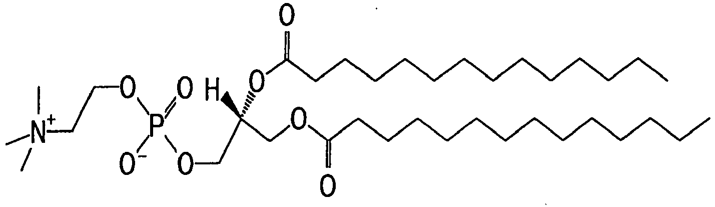

The content of the amphoteric phospholipid 112 in the lipid bi-layer membrane is normally 5-95 mol% and preferably in the order of 50 mol%. When the content is less than 5 mol% or exceeds 95 mol%, the membrane vesicle 110 may not fission.

The aqueous solution-applying apparatus 120 is not limited to any specific apparatus as long as the aqueous solution-applying apparatus makes it possible to use a control unit (not shown) to control applying, to the membrane vesicle 110 at a predetermined timing, a predetermined amount of aqueous solution 121 of an anionic material having a hydrophobic group, thus a known apparatus such as an automatic titration apparatus, etc., may be used. In lieu of the aqueous solution-applying apparatus 120, a pipette, a dropping funnel, etc., may be used to apply, to the membrane vesicle 110, the aqueous solution 121 of the anionic material having the hydrophobic group.

The anionic material having the hydrophobic group may include an anionic material having a group in which hydrogen atoms are removed from an aromatic hydrocarbon such as pyrene, anthracene, etc., and two or more kinds thereof may be used in combination, but is not particularly limited thereto. Among the above, the anionic material is preferably pyranine, which is expressed in a chemical formula:

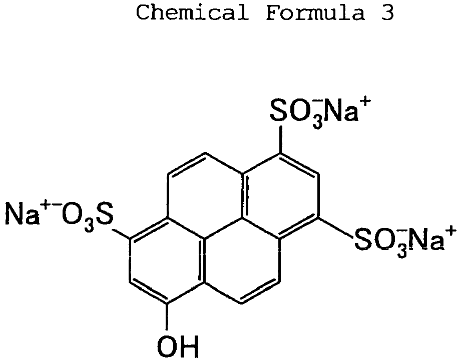

The content of the anionic material having the hydrophobic group that is to be applied to the membrane vesicle 110 is, relative to the cationic lipid 111, normally 0.1-10 mol% and preferably in the order of 0.5 mol%. When the content is less than 0.1 mol% or exceeds 10 mol%, the membrane vesicle 110 may not fission.

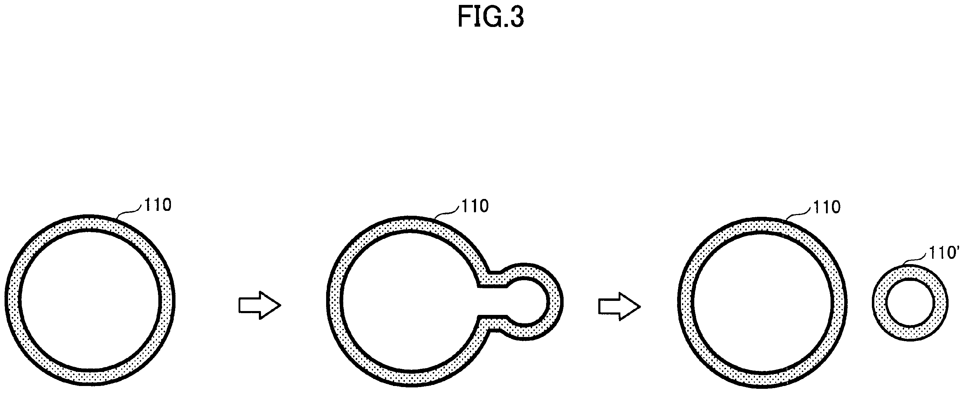

Below a mechanism is described for using the membrane vesicle fission system 100 to fission the membrane vesicle 110. When a control unit is used to apply, from the aqueous solution-applying apparatus 120 to the membrane vesicle 110, a predetermined amount of aqueous solution 121 of the anionic material having the hydrophobic group, the anionic material mutually interacts with the cationic lipid 111 which exists in the bi-layer lipid layer of the membrane vesicle 110. More specifically, mutual electrostatic interaction occurs between an anionic group of the anionic material and a cationic group of the cationic lipid 111, which causes hydrophobic interaction between the hydrophobic group of the anionic material and the hydrophobic group of the cationic lipid 111. As a result, the membrane vesicle 110 deforms and then fissions, generating a membrane vesicle 110' having a part of the lipid bi-layer membrane of the membrane vesicle 110 (FIG. 3). Then, when a water-soluble material is used as the anionic material having the hydrophobic group, the CMC does not have to be taken into account, thus the membrane vesicle 110 may be fissioned in a general-purpose condition.

The membrane vesicle 110 has a lipid bi-layer membrane having therein the cationic lipid 111 and the amphoteric phospholipid 112 coexisting, whereby the lipid bi-layer membrane is not limited to a specific membrane as long as it includes the cationic lipid 111, and does not have to include the amphoteric phospholipid 112. Moreover, the lipid bi-layer membrane may further include cholesterol, and may have a lipid raft formed therein.

In general, it is known that the membrane vesicle may be artificially constructed of various sizes ranging from several tens of nanometers (nms) to several tens of micrometers (µms) and that, it may also be constructed using a synthetic lipid (see P. Luigi, et al., "Giant Vesicles," Chapters 1-5, ISBN: 0471979864, John Wiley & Sons Inc., 2000, for example).

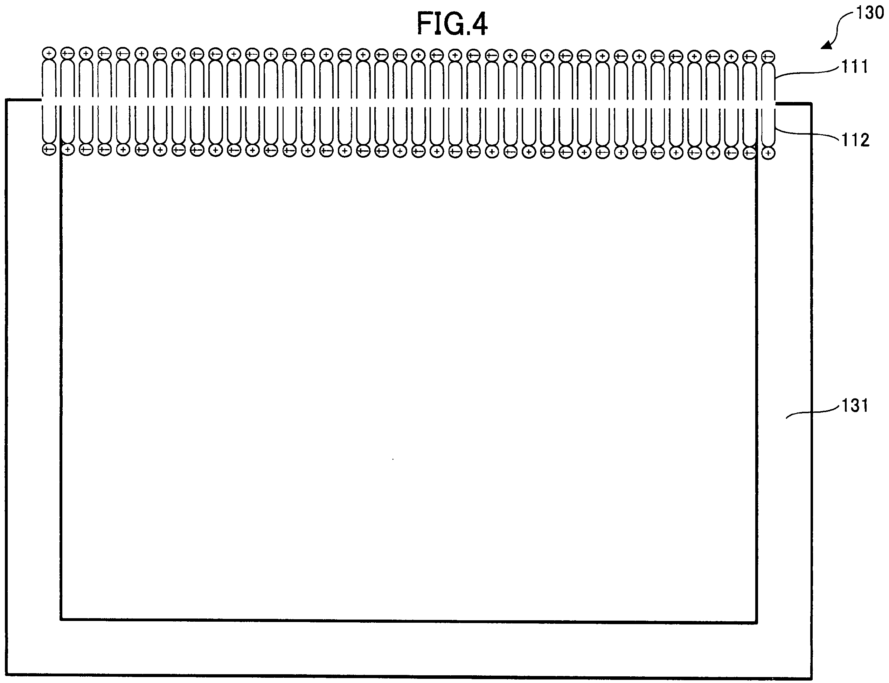

A variation of the membrane vesicle 110 is illustrated in FIG. 4. A membrane vesicle 130 has a silicon compact 131 and a lipid bi-layer membrane having therein the cationic lipid 111 and the amphoteric phospholipid 112 coexisting. Here, in a manner similar to the membrane vesicle 110, the membrane vesicle 130 also includes therein the cationic lipid 111, which can mutually interact with the anionic material, so that it may be applied to the membrane fission system 100.

The compact 131 may be made of glass, etc., and is not limited to silicon.

The membrane vesicle fission system according to the present invention can widely apply to systems which use the membrane vesicle to transport materials. Below, a molecular communication system is described.

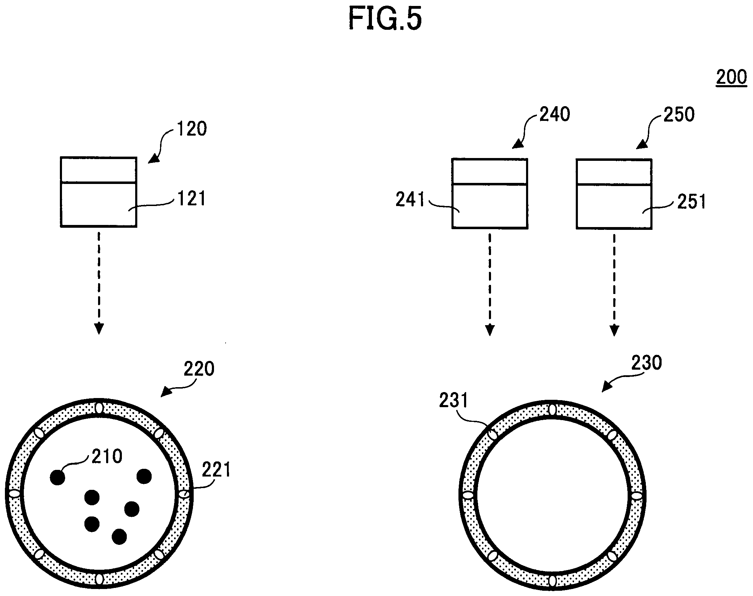

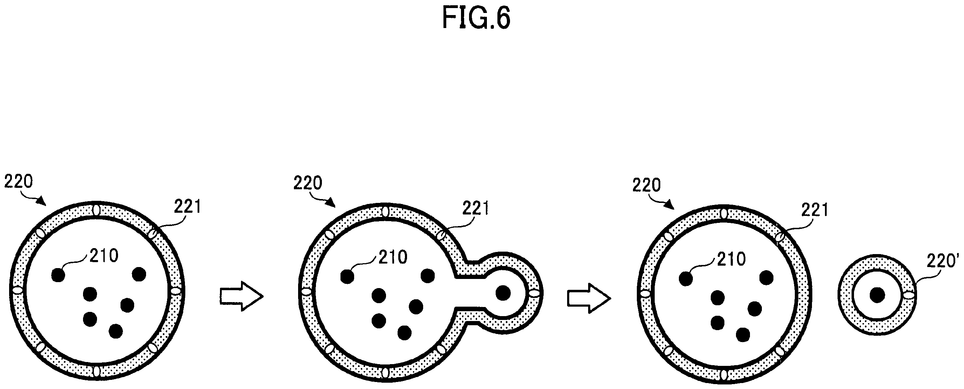

One example of a molecular communication system according to the present invention is illustrated in FIG. 5. A molecular communication system 200 has: a membrane vesicle 220 as a molecular transmitter, the membrane vesicle 220 having an information molecule 210 included therein; an aqueous solution-applying apparatus 120 which applies, to the membrane vesicle 220, an aqueous solution 121 of an anionic material having a hydrophobic group; a membrane vesicle 230 as a molecular receiver; an aqueous solution-applying apparatus 240 which applies, to the membrane vesicle 230, an aqueous solution 241 of Cu²⁺; an aqueous solution-applying apparatus 250 which applies, to the membrane vesicle 230, an aqueous solution 251 of an anti-microbial peptide. The membrane vesicles 220, 220', and 230 exist in water (see also FIG. 6).

The information molecule 210 includes DNA, an ion, a peptide, etc., but is not limited thereto. Here, the DNA is encoded into information such as a base sequence, a hairpin structure, a bulge structure, etc. Moreover, the ion is encoded into information such as a type of ions, etc. Furthermore, the peptide is encoded into information such as an amino acid sequence, etc.

The membrane vesicle 220 is similar to the membrane vesicle 110, except that it has embedded therein a Gemini peptide lipid 221 having a pseudo crown ether as a spacer. The membrane vesicle 220 may be formed in water by agitating the cationic lipid 111, the amphoteric phospholipid 112 and the Gemini peptide lipid 221, or by having the cationic lipid 111, the amphoteric phospholipid 112 and the Gemini peptide lipid 221 undergo ultrasonic dispersion. Moreover, the membrane vesicle 220 may be formed by placing, into a glass tube, an organic solvent such as chloroform or methanol in which the cationic lipid 111, the amphoteric phospholipid 112 and the Gemini peptide lipid 221 are dissolved, and then adding water to a lipid film obtained by volatilizing the organic solvent.

The membrane vesicle 230 has a lipid bi-layer membrane including a lipid other than a cationic lipid, and has embedded therein a Gemini peptide lipid 231 having a pseudo crown ether as a spacer. The lipid other than the cationic lipid includes a glycolipid, a phospholipid such as phosphatidylcholine, etc. The membrane vesicle 230 may be formed in water by agitating the lipid or by having the lipid undergo ultrasonic dispersion. Moreover, the membrane vesicle 230 may be formed by placing, into a glass tube, etc., an organic solvent such as chloroform or methanol in which the lipid is dissolved, and then adding water to a lipid film obtained by volatilizing the organic solvent.

The aqueous solution-applying apparatus 240 is not specifically limited to any specific apparatus as long as the aqueous solution-applying apparatus makes it possible to use a control unit to control applying, to the membrane vesicle 230 at a predetermined timing, a predetermined amount of aqueous solution 241 of Cu²⁺, thus a known apparatus such as an automatic titration apparatus, etc., may be used. In lieu of the aqueous solution-applying apparatus 240, a pipette, a dropping funnel, etc., may be used to apply, to the membrane vesicle 230, the aqueous solution 241 of Cu²⁺.

The aqueous solution-applying apparatus 250 is not specifically limited to any specific apparatus as long as the aqueous solution-applying apparatus makes it possible to use a control unit to control applying, to the membrane vesicle 230 at a predetermined timing, a predetermined amount of aqueous solution 251 of an anti-microbial peptide, thus a known apparatus such as an automatic titration apparatus, etc., may be used. In lieu of the aqueous solution-applying apparatus 250, a pipette, a dropping funnel, etc., may be used to apply, to the membrane vesicle 230, the aqueous solution 251 of the anti-microbial peptide.

Below a mechanism is described for using the molecular communication system 200 to conduct molecular communication. When a control unit is used to apply from the aqueous solution-applying apparatus 120, to the membrane vesicle 220 including therein the information molecule 210, a predetermined amount of the aqueous solution 121 of the anionic material having the hydrophobic group, the membrane vesicle 220 deforms and then fissions, generating a membrane vesicle 220' having included therein the information molecule 210 (see FIG. 6). The generated membrane vesicle 220', which is dispersed, may be transported by forming a water flow. Next, when a control unit is used to apply, from the aqueous solution-applying apparatus 240 to the membrane vesicles 220' and 230, a predetermined amount of the aqueous solution 241 of Cu²⁺, the membrane vesicle 220' aggregates to a surface of the membrane vesicle 230. Then when the control unit is used to apply, from the aqueous solution-applying apparatus 250 to the aggregated membrane vesicles 220' and 230, a predetermined amount of the aqueous solution 251 of the anti-microbial peptide, a micro hole is induced in the membrane vesicles 220' and 230, respectively, causing the information molecule 210 to be taken into the membrane vesicle 230. The aqueous solution 251 of the anti-microbial peptide disperses within the environment over time, so that the micro hole formed in the membrane vesicles 220' and 230 closes after an elapsed time period which is predetermined. Then, a predetermined amount of aqueous solution of K⁺ may be applied, to the membrane vesicles 220' and 230, from an aqueous solution-applying apparatus similar to the aqueous solution-applying apparatuses 240 and 250 to dissociate the membrane vesicles 220' from 230.

In lieu of the Gemini peptide lipids 221 and 231, a Gemini peptide lipid having, as a spacer, a group in which hydrogen atoms are removed from azobenzene may be used. In this case, instead of the predetermined amount of the aqueous solution 241 of Cu²⁺ being applied from the aqueous solution-applying apparatus 240 to the membrane vesicles 220' and 230, when a predetermined amount of ultraviolet rays is radiated the membrane vesicle 220' aggregates to a surface of the membrane vesicle 230. Then, a predetermined amount of visible rays is radiated from a light irradiating apparatus to the membrane vesicles 220' and 230 to dissociate the membrane vesicles 220' from 230.

Moreover, instead of using the aqueous solution-applying apparatus 250 to apply, to the aggregated membranes 230 and 220', the aqueous solution 251 of the anti-microbial peptide to form the micro hole, an aqueous solution of La³⁺ or an aqueous solution of a double-stranded DNA may be applied to fuse the membrane vesicles 220' and 230.

### Example 1

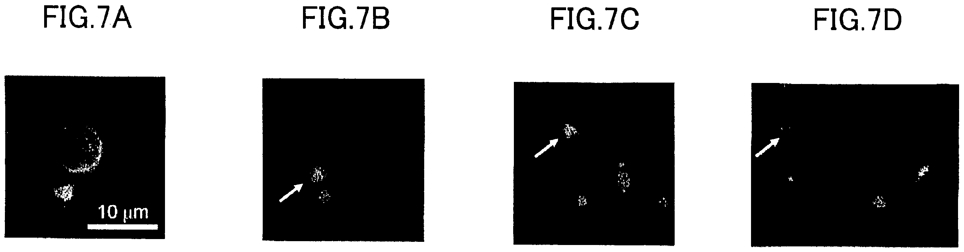

1 ml of a 0.3mM N⁺C₃U2C₁₆ chloroform solution is mixed with 1 ml of a 0.7mM DMPC chloroform solution and then chloroform is volatilized to form a thin film, to which a predetermined amount of water is added to incubate, thereby preparing a membrane vesicle. Next, when an aqueous solution-applying apparatus is used to apply 10 µl of a 2.5 µ M pyranine aqueous solution to 10 µl of a membrane vesicle solution, the membrane vesicle deforms and then fissions, generating a membrane vesicle having a part of a lipid bi-layer membrane of the membrane vesicle (see FIGS. 7A, 7B, 7C, and 7D). FIGS. 7A, 7B, 7C, and 7D respectively illustrate a membrane vesicle which is immediately after, 10 seconds after, 15 seconds after, and 25 seconds after adding the pyranine aqueous solution.

## Claims

1. A membrane vesicle fission system (100,200) comprising:
a membrane vesicle (110, 130, 220) having a lipid bi-layer membrane including a cationic lipid; and
a unit (120) comprising an anionic material having a hydrophobic group and arranged to apply it to the membrane vesicle.

2. The membrane vesicle fission system as claimed in claim 1, wherein the anionic material is pyranine.

3. The membrane vesicle fission system as claimed in claim 1 or 2, wherein the cationic lipid is N⁺C₃U2C₁₆.

4. The membrane vesicle fission system as claimed in any one of claims 1 to 3, wherein the lipid bi-layer membrane further includes an amphoteric phospholipid.

5. A molecular communication system (200) having the membrane vesicle fission system (100) as claimed in any one of claims 1 to 4, the membrane vesicle (220) including therein an information molecule (210), the molecular communication system (200) further comprising:
a unit arranged to transport by a water flow, to a third membrane vesicle (230) a second dispersed membrane vesicle (220') generated by apply the anionic material having the hydrophobic group to the membrane vesicle (220), the second membrane vesicle (220') including therein the information molecule (210);
a unit (251) arranged to cause the second membrane vesicle (220') to be aggregated on a surface of the third membrane vesicle (230) by applying an aqueous solution (241) of Cu²⁺ to the second membrane vesicle (220') and the third membrane vesicle (230), or by radiating ultraviolet rays to the second membrane vesicle (220') and the third membrane vesicle (230); and
a unit (250) arranged to cause the information molecule (210) included in the transported second membrane vesicle (220') to be taken into the third membrane vesicle (230) by forming microholes on the second membrane vesicle (220') and the third membrane vesicle (230) by applying an anti-microbial peptide to the third membrane vesicle (230) and the second membrane vesicle (200') aggregated on the surface of the third membrane vesicle (230), or by fusing the second membrane vesicle (220') and the third membrane vesicle (230) by applying an aqueous solution of La³⁺ or a double-stranded DNA.

6. A membrane vesicle fission method, comprising the step of applying, to a membrane vesicle (110, 130, 220) having a lipid bi-layer membrane including a cationic lipid, an anionic material having a hydrophobic group.

7. The membrane vesicle fission method as claimed in claim 6, wherein the anionic material is pyranine.

8. The membrane vesicle fission method as claimed in claim 6 or 7, wherein the cationic lipid is N⁺C₃U2C₁₆.

9. The membrane vesicle fission method as claimed in any one of claims 6 to 8, wherein the lipid bi-layer membrane further includes an amphoteric phospholipid.

10. A molecular communication method which uses the membrane vesicle fission method as claimed in any one of claims 6 to 9, the membrane vesicle (220) including therein an information molecule (210), the molecular communication method comprising the steps of:
transporting by a water flow, to a third membrane vesicle (230) a second dispersed membrane vesicle (220') generated by applying the anionic material having the hydrophobic group to the membrane vesicle (220), the second membrane vesicle (220') including therein the information molecule (210);
causing the second membrane vesicle (220') to be aggregated on a surface of the third membrane vesicle (230) by applying an aqueous solution (241) of Cu²⁺ to the second membrane vesicle (220') and the third membrane vesicle (230), or by radiating ultraviolet rays to the second membrane vesicle (220') and the third membrane vesicle (230); and
causing the information molecule (210) included in the transported second membrane vesicle (220') to be taken into the third membrane vesicle (230) by forming microholes on the second membrane vesicle (220') and the third membrane vesicle (230) by applying an anti-microbial peptide to the third membrane vesicle (230) and the second membrane vesicle (220') aggregated on the surface of the third membrane vesicle (230), or by fusing the second membrane vesicle (220') and the third membrane vesicle (230) by applying an aqueous solution of La³⁺ or a double-stranded DNA.

## Patentansprüche

1. Membranvesikelspaltungssystem (100,200) umfassend:
ein Membranvesikel (110, 130, 220), das eine Lipid-Zweischichtmembran aufweist, die ein kationisches Lipid umfasst; und
eine Einheit (120), die ein anionisches Material umfasst, das eine hydrophobe Gruppe aufweist und zum Aufbringen auf das Membranvesikel angeordnet ist.

2. Membranvesikelspaltungssystem nach Anspruch 1, wobei das anionische Material Pyranin ist.

3. Membranvesikelspaltungssystem nach Anspruch 1 oder 2, wobei das kationische Lipid N⁺C₃U2C₁₆ ist.

4. Membranvesikelspaltungssystem nach einem der Ansprüche 1 bis 3, wobei die Lipid-Doppelschichtmembran ferner ein amphoteres Phospholipid umfasst.

5. Molekulares Kommunikationssystem (200), das das Membranvesikelspaltungssystem (100) nach einem der Ansprüche 1 bis 4 aufweist, wobei das Membranvesikel (220) ein Informationsmolekül (210) darin umfasst, wobei das Kommunikationssystem (200) ferner Folgendes umfasst:
eine Einheit, die zum Transportieren, durch einen Wasserfluss, zu einem dritten Membranvesikel (230) eines zweiten, dispergierten Membranvesikels (220') angeordnet ist, das durch Aufbringen des anionischen Materials, das die hydrophobe Gruppe aufweist, auf das Membranvesikel (220) erzeugt wird, wobei das zweite Membranvesikel (220') das Informationsmolekül (210) darin umfasst;
eine Einheit (251), die angeordnet ist, zu verursachen, dass das zweite Membranvesikel (220') auf einer Oberfläche des dritten Membranvesikels (230) durch Aufbringen einer wässrigen Lösung (241) von Cu²⁺ auf das zweite Membranvesikel (220') und das dritte Membranvesikel (230) oder durch Strahlen von Ultraviolettstrahlen auf das zweite Membranvesikel (220') und das dritte Membranvesikel (230) aggregiert wird; und
eine Einheit (250), die angeordnet ist, um zu verursachen, dass das Informationsmolekül (210), das in dem transportierten zweiten Membranvesikel (220') eingeschlossen ist, in das dritte Membranvesikel (230) gebracht wird durch Bilden von Mikrolöchern an dem zweiten Membranvesikel (220') und dem dritten Membranvesikel (230) durch Aufbringen eines antimikrobiellen Peptids auf das dritte Membranvesikel (230) und das zweite Membranvesikel (200'), das auf der Oberfläche des dritten Membranvesikels (230) aggregiert ist, oder durch Schmelzen des zweiten Membranvesikels (220') und des dritten Membranvesikels (230) durch Aufbringen einer wässrigen Lösung von La³⁺ oder einer Doppelstrang-DNA.

6. Membranvesikelspaltungsverfahren, umfassend den Schritt des Aufbringens, auf ein Membranvesikel (110, 130, 220), das eine Lipid-Doppelschichtmembran aufweist, die ein kationisches Lipid umfasst, eines anionischen Materials, das eine hydrophobe Gruppe aufweist.

7. Membranvesikelspaltungsverfahren nach Anspruch 6, wobei das anionische Material Pyranin ist.

8. Membranvesikelspaltungsverfahren nach Anspruch 6 oder 7, wobei das kationische Lipid N⁺C₃U2C₁₆ ist.

9. Membranvesikelspaltungsverfahren nach einem der Ansprüche 6 bis 8, wobei die Lipid-Doppelschichtmembran ferner ein amphoteres Phospholipid umfasst.

10. Molekulares Kommunikationsverfahren, bei dem das Membranvesikelspaltungsverfahren nach einem der Ansprüche 6 bis 9 verwendet wird, wobei das Membranvesikel (220) ein Informationsmolekül (210) darin umfasst, wobei das molekulare Kommunikationssystem ferner die Schritte umfasst des:
Transportierens, durch einen Wasserfluss, zu einem dritten Membranvesikel (230), eines zweiten, dispergierten Membranvesikels (220'), das durch Aufbringen des anionischen Materials, das die hydrophobe Gruppe aufweist, auf das Membranvesikel (220), wobei das zweite Membranvesikel (220') das Informationsmolekül (210) darin umfasst;
Verursachens, dass das zweite Membranvesikel (220') auf einer Oberfläche des dritten Membranvesikels (230) durch Aufbringen einer wässrigen Lösung (241) von Cu²⁺ auf das zweite Membranvesikel (220') und das dritte Membranvesikel (230) oder durch Strahlen von Ultraviolettstrahlen auf das zweite Membranvesikel (220') und das dritte Membranvesikel (230) aggregiert wird; und
Verursachens, dass das Informationsmolekül (210), das in dem transportierten zweiten Membranvesikel (220') eingeschlossen ist, in das dritte Membranvesikel (230) gebracht wird durch Bilden von Mikrolöchern an dem zweiten Membranvesikel (220') und dem dritten Membranvesikel (230), durch Aufbringen eines antimikrobiellen Peptids auf das dritte Membranvesikel (230) und das zweite Membranvesikel (220'), das auf der Oberfläche des dritten Membranvesikels (230) aggregier ist, oder durch Schmelzen des zweiten Membranvesikels (220') und des dritten Membranvesikels (230) durch Aufbringen einer wässrigen Lösung von La³⁺ oder einer Doppelstrang-DNA.

## Revendications

1. Système de fission de vésicule membranaire (100, 200) comprenant:
une vésicule membranaire (110, 130, 220) ayant une membrane bicouche lipidique incluant un liquide cationique; et
une unité (120) comprenant un matériau anionique ayant un groupe hydrophobe et configurée pour l'appliquer à la vésicule membranaire.

2. Système de fission de vésicule membranaire tel que revendiqué selon la revendication 1, dans lequel le matériau anionique est la pyranine.

3. Système de fission de vésicule membranaire tel que revendiqué selon la revendication 1 ou 2, dans lequel le lipide cationique est N⁺C₃U2C₁₆.

4. Système de fission de vésicule membranaire tel que revendiqué selon l'une quelconque des revendications 1 à 3, dans lequel la membrane bicouche lipidique inclut en outre un phospholipide amphotère.

5. Système de communication moléculaire (200) ayant le système de fission de vésicule membranaire (100) tel que revendiqué selon l'une quelconque des revendications 1 à 4, la vésicule membranaire (220) incluant à l'intérieur une molécule d'information (210), le système de communication moléculaire (200) comprenant en outre:
une unité configurée pour le transport par un écoulement aqueux, vers une troisième vésicule membranaire (230) une seconde vésicule membranaire dispersée (220') générée en appliquant le matériau anionique possédant le groupe hydrophobe à la vésicule membranaire (220), la seconde vésicule membranaire (220') incluant à l'intérieur la molécule d'information (210);
une unité (251) configurée pour entraîner l'agrégation de la seconde vésicule membranaire (220') sur une surface de la troisième vésicule membranaire (230) en appliquant une solution aqueuse (241) de Cu²⁺ à la seconde vésicule membranaire (220') et la troisième vésicule membranaire (230), ou par irradiation de rayons ultraviolets au niveau de la seconde vésicule membranaire (220') et de la troisième vésicule membranaire (230); et
une unité (250) configurée pour que la molécule d'information (210) incluse dans la seconde vésicule membranaire transportée (220') soit prise dans la troisième vésicule membranaire (230) en formant des microtrous sur la seconde vésicule membranaire (220') et la troisième vésicule membranaire (230) en appliquant un peptide antimicrobien à la troisième vésicule membranaire (230) et à la seconde vésicule membranaire (200') agrégée sur la surface de la troisième vésicule membranaire (230), ou en fusionnant la seconde vésicule membranaire (220') et la troisième vésicule membranaire (230) en appliquant une solution aqueuse de La³⁺ ou un ADN double brin.

6. Procédé de fission de vésicule membranaire, comprenant l'étape d'application, à une vésicule membranaire (110, 130, 220) ayant une membrane bicouche lipidique incluant un lipide cationique, un matériau anionique ayant un groupe hydrophobe.

7. Procédé de fission de vésicule membranaire tel que revendiqué selon la revendication 6, dans lequel le matériau anionique est la pyranine.

8. Procédé de fission de vésicule membranaire tel que revendiqué selon la revendication 6 ou 7, dans lequel le lipide cationique est N⁺C₃U2C₁₆.

9. Procédé de fission de vésicule membranaire tel que revendiqué selon l'une quelconque des revendications 6 à 8, dans lequel la membrane bicouche lipidique inclut en outre un phospholipide amphotère.

10. Procédé de communication moléculaire qui utilise le procédé de fission de vésicule membranaire tel que revendiqué selon l'une quelconque des revendications 6 à 9, la vésicule membranaire (220) incluant à l'intérieur une molécule d'information (210), le procédé de communication moléculaire comprenant les étapes de:
transport par un écoulement aqueux, vers une troisième vésicule membranaire (230) d'une seconde vésicule membranaire dispersée (220') générée en appliquant le matériau anionique ayant le groupe hydrophobe à la vésicule membranaire (220), la seconde vésicule membranaire (220') incluant à l'intérieur la molécule d'information (210);
déclenchement de l'agrégation de la seconde vésicule membranaire (220') sur une surface de la troisième vésicule membranaire (230) en appliquant une solution aqueuse (241) de Cu²⁺ à la seconde vésicule membranaire (220') et la troisième vésicule membranaire (230), ou en irradiant des rayons ultraviolets au niveau de la seconde vésicule membranaire (220') et de la troisième vésicule membranaire (230); et
déclenchement du prélèvement de la molécule d'information (210) incluse dans la seconde vésicule membranaire transportée (220') dans la troisième vésicule membranaire (230) en formant des microtrous sur la seconde vésicule membranaire (220') et la troisième vésicule membranaire (230) en appliquant un peptide antimicrobien à la troisième vésicule membranaire (230) et à la seconde vésicule membranaire (220') agrégée sur la surface de la troisième vésicule membranaire (230), ou en fusionnant la seconde vésicule membranaire (220') et la troisième vésicule membranaire (230) en appliquant une solution aqueuse de La³⁺ ou un ADN double brin.
